# EUROPEAN PATENT APPLICATION

(11) **EP 4 622 385 A1**
(43) Date of publication of application: **24.09.2025**
(21) Application number: 23891299.2
(22) Date of filing: 24.10.2023
(51) Int. Cl.: H04W 76/15, H04W 16/28, H04W 72/0453, H04W 84/12

(54) **COMMUNICATION DEVICE, CONTROL METHOD, AND PROGRAM**

(30) Priority: 15.11.2022 JP 2022182934
(71) Applicant: CANON KABUSHIKI KAISHA, Tokyo 146-8501 (JP)
(72) Inventor: YOSHIKAWA Yuki, Tokyo 146-8501 (JP)
(74) Representative: Canon Europe Limited
(86) International application number: PCT/JP2023/038233
(87) International publication number: WO 2024/106144

(57) **Abstract**

When establishing links on a plurality of different frequency channels with another communication apparatus on the basis of a connection request received from the another communication apparatus, the communication apparatus performs control not to establish links on a plurality of different frequency channels based on the connection request when links to be established, which are identified at least on the basis of information included in the connection request, are only links on frequency channels in a millimeter wave band.

## Description

### Technical Field

The present invention relates to a communication apparatus that communicates data.

### Background Art

As the amount of data being communicated has been increased in recent years, the development of communication technologies, such as wireless local area networks (LANs), has been advanced. As major communication standards for wireless LANs, a series of Institute of Electrical and Electronics Engineers (IEEE) 802.11 standards is known. The series of IEEE 802.11 standards includes standards, such as the IEEE 802.11a/b/g/n/ac/ax.

The IEEE 802.11be standard, which is a successor standard to the IEEE 802.11ax, is being formulated. As a new feature of the IEEE 802.11be standard, a function, such as Multi-Link communication, is being studied in which an AP and an STA establish a plurality of links on different frequency channels and communicate in parallel. Patent Literature 1 describes a mechanism for establishing a plurality of links for Multi-Link communication.

### Citation List

### Patent Literature

PTL 1: Japanese Patent Laid-Open No. 2021-103805

### Summary of Invention

### Technical Problem

The Extreme High Throughput (EHT) TG is considering operating communication apparatuses that conform to the IEEE 802.11be standard in frequency bands, such as the 2.4 GHz band, the 4.9 and 5 GHz bands, and the 6 GHz band. TG is an abbreviation for Task Group. Studies on a successor standard to the IEEE 802.11be have also started. The Ultra High Reliablity (UHR) SG that studies the successor standard is considering improving the communication throughput of communication apparatuses conforming to the successor standard by using frequency bands in the millimeter wave band, such as the 45 GHz band and the 60 GHz band. SG is an abbreviation for Study Group. The 45 GHz band, the 60 GHz band, and the like are characterized in that they can secure a wide bandwidth and thus can improve throughput, but are also characterized in that communication is easily interrupted due to the strong directivity of radio waves. The millimeter wave band thus has the problem of easy interruption of communication.

### Solution to Problem

The present invention has been made in view of at least one of the problems described above. An object of the present invention is to provide a mechanism that establishes, when performing Multi-Link communication using a communication link in the millimeter wave band, a communication link in a frequency band different from the millimeter wave band, in addition to the communication link in the millimeter wave band.

A communication apparatus according to an aspect of the present invention includes control means for establishing links on a plurality of different frequency channels with another communication apparatus on the basis of a connection request received from the another communication apparatus. When links to be established, which are identified at least on the basis of information included in the connection request, are only links on frequency channels in a millimeter wave band, the control means does not establish links on a plurality of different frequency channels based on the connection request.

### Advantageous Effects of Invention

In the aspect of the present invention, when Multi-Link communication is performed using a communication link in the millimeter wave band, it is possible to establish a communication link in a frequency band different from the millimeter wave band, in addition to the communication link in the millimeter wave band. Therefore, in a propagation environment where communication in the millimeter wave band is not interrupted, high-throughput communication can be expected, and in the case of interruption, communication can be expected to continue using a communication link in a different frequency band.

Other features and advantages of the present invention will become apparent from the following description with reference to the accompanying drawings. In the accompanying drawings, the same or similar components are denoted by the same reference numerals.

### Brief Description of Drawings

The accompanying drawings, which are incorporated in and constitute part of the specification, illustrate embodiments of the present invention and are used, together with the description, to explain the principles of the present invention.
[Fig. 1] Fig. 1 is a diagram illustrating an exemplary configuration of a network.
[Fig. 2] Fig. 2 is a diagram illustrating an exemplary hardware configuration of communication apparatuses (AP/STA).
[Fig. 3] Fig. 3 is a diagram illustrating an exemplary functional configuration of the communication apparatuses (AP/STA).
[Fig. 4] Fig. 4 is a flow chart illustrating an example of control in an AP.
[Fig. 5] Fig. 5 is a sequence diagram illustrating an example of connection processing.
[Fig. 6] Fig. 6 is a schematic diagram illustrating an exemplary Multi-Link element.
[Fig. 7] Fig. 7 is a flow chart illustrating an example of control in an STA according to a second embodiment.
[Fig. 8] Fig. 8 is a schematic diagram illustrating an exemplary MBO-OCE.
[Fig. 9] Fig. 9 is a schematic diagram illustrating an exemplary Probe Request Multi-Link element.
[Fig. 10] Fig. 10 is a sequence diagram illustrating an example of connection processing according to a third embodiment.

### Description of Embodiments

Hereinafter, embodiments will be described in detail with reference to the accompanying drawings. Note that the following embodiments are not intended to limit the invention as claimed. Although a plurality of features are described in the embodiments, not all the features are essential to the invention, and the features may be combined in any manner. In the accompanying drawings, the same or similar components are denoted by the same reference numerals and redundant description will be omitted.

### <First Embodiment>

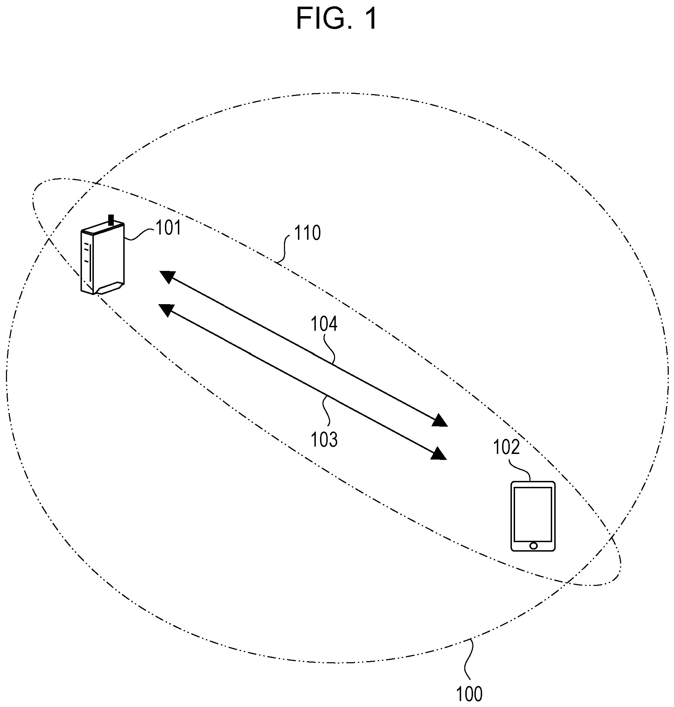

Fig. 1 illustrates an exemplary configuration of a network according to the present embodiment. The network of the present embodiment includes one access point apparatus (hereinafter also simply referred to as AP, AP STA, or access point) and one station apparatus (hereinafter also simply referred to as STA, Non-AP STA, or station). Hereinafter, an AP 101 and an STA 102 will be collectively referred to as a communication apparatus.

The AP 101 is configured to be capable of communicating radio frames that conform to a successor standard to the IEEE 802.11be standard aiming for a maximum transmission rate of 46.08 Gbps. The successor standard aims for a maximum transmission rate of 90 Gbps to 100 Gbps or higher. Similarly, the STA 102 is configured to be capable of communicating radio frames that conform to the successor standard. IEEE is an abbreviation for Institute of Electrical and Electronics Engineers. The main features of this successor standard to the 802.11be include AP coordination as well as support for reliable communication and low-latency communication. On the basis of the above, in the present embodiment, a successor standard that succeeds the IEEE 802.11be and aims at a maximum transmission rate of 90 Gbps to 100 Gbps or higher will also be referred to as IEEE 802.11 Ultra High Reliability (UHR). Radio frames communicated in accordance with the successor standard will also be referred to as UHR PPDU. PPDU is an abbreviation for PLCP Protocol Data Unit, and PLCP is an abbreviation for Physical Layer Convergence Protocol.

The names, the IEEE 802.11UHR and the UHR standard, were given for convenience on the basis of the goals to be achieved by the successor standard and the main features of the standard. The successor standard may be given a different name once formulation of the standard is completed. Note that the present description and the appended claims are essentially applicable to communication apparatuses that conform to the successor standard to the 802.11be standard and support communication in the millimeter wave band and Multi-Link communication (described below).

Fig. 1 illustrates a wireless communication network including one AP and one STA as an example, but the number of these apparatuses may be greater than that illustrated. Although the AP 101 and the STA 101 are configured to support communication (transmission and reception) of UHR PPDUs, they may be configured to support communication of PPDUs conforming to a legacy standard preceding the UHR standard. Specifically, the AP 101 and the STA 102 may be configured to support transmission and reception of PPDUs conforming to, for example, the IEEE 802.11a/b/g/n/ac/ax/be standards.

Each communication apparatus is configured to be capable of communicating on operating frequency channels in frequency bands, such as the 2.4 GHz band, the 3.6 GHz band, the 5 GHz band, and the 6 GHz band, as well as in the 45 GHz band and the 60 GHz band that are called millimeter wave bands. The frequency bands used by each communication apparatus are not limited to those described above, and a different frequency band, such as the Sub-1 GHz band, may be used. In the present embodiment, for the purpose of explanation, frequency bands of Sub-1 GHz to 10 GHz or lower will be collectively defined as a Lower Band. However, the definition of Lower Band is not limited to this. Of frequency bands lower than or equal to 10 GHz, only frequency bands often used, such as 2.4 GHz, 5 GHz, and 6 GHz, may be defined as a Lower Band.

The AP 101 and the STA 102 can communicate using bandwidths of 20 MHz, 40 MHz, 80 MHz, 160 MHz, 320 MHz, 540 MHz, 640 MHz, 1080 MHz, and 2160 MHz. The bandwidths used by each communication apparatus are not limited to this and different bandwidths, such as 240 MHz and 480 MHz, may be used. Each communication apparatus may be configured such that bandwidths of 1080 MHz or greater can be used only in the millimeter wave frequency band.

The AP 101 and the STA 102 may also be configured to support wireless communication based on other communication standards, such as Bluetooth (registered trademark), NFC, and Bluetooth (registered trademark) Low Energy (LE). NFC is an abbreviation for Near Field Communication. The AP 101 and the STA 102 may be configured to support wire communication using an Ethernet (registered trademark) cable, or wire communication using an optical fiber. Examples of the AP 101 include, but are not limited to, wireless LAN routers and personal computers (PCs). The AP 101 and the STA 102 may be information processing apparatuses, such as wireless chips that support transmission and reception of UHR PPDUs. Examples of the STA 102 include, but are not limited to, cameras, tablets, smartphones, PCs, mobile phones, video cameras, wearable devices, such as smart glasses.

The AP 101 and the STA 102 can perform Multi-Link communication which involves establishing communication links through a plurality of frequency channels and communicating. Hereinafter, a communication link will also be simply referred to as a link. An AP that performs Multi-Link communication will also be referred to as an AP Multi-Link Device (MLD). For example, the AP 101 can establish a link 103 with the STA 102 through a first frequency channel in the 5 GHz band and communicate. In parallel with this, the AP 101 and the STA 102 can establish, for example, a link 104 through a second frequency channel in the 60 GHz band and communicate. In this case, the STA 102 performs Multi-Link communication which involves communicating in the second link 104 through the second frequency channel, in parallel with communicating in the link 103 through the first frequency channel. Thus, by establishing links on a plurality of different frequency channels with the STA 102, the AP 101 can improve throughput in communication with the STA 102.

Each link is assigned a Link ID for each network where links in Multi-Link communication can be established. Assume, for example, that the STA 102 participates in a network of the 5 GHz band and the 60 GHz band among networks created by the AP 101. When a 5 GHz band link established between the AP 101 and the STA 102 is denoted by 103, a common Link ID = 1 is assigned to this link. Similarly, when a 60 GHz band link established between the AP 101 and the STA 102 is denoted by 104, a Link ID = 2 is assigned to this link. These values are merely examples. Different values may be assigned to these links, or a Link ID may be assigned to each established link or to each STA.

In the series of IEEE 802.11 standards, the minimum unit of the bandwidth of each frequency channel in the 2.4 GHz band/5 GHz band/6 GHz band is defined as 20 MHz. The minimum unit of the bandwidth of each frequency channel in the 45 GHz band is defined as 540 MHz, and that in the 60 GHz band is defined as 1080 MHz or 2160 MHz. Here, the frequency channel refers to a frequency channel defined in the series of IEEE 802.11 standards. In these standards, a plurality of frequency channels are defined for each of frequency bands, such as the 2.4 GHz band, the 5 GHz band, the 6 GHz band, the 45 GHz band, and the 60 GHz band. By bonding to adjacent frequency channels, a bandwidth of 40 MHz or greater can be used in one frequency channel. For example, in the 2.4 GHz band/5 GHz band/6 GHz band, the frequency widths, such as 20 MHz, 40 MHz, 80 MHz, 160 MHz, 320 MHz, 480 MHz, and 640 MHz, can be used.

Although there are some restrictions, each communication apparatus may be configured to establish a plurality of links in different frequency bands in Multi-Link communication. For example, the AP 101 and the STA 102 may be configured to establish a third link in the 45 GHz band, in addition to the link 103 in the 5 GHz band and the link 104 in the 60 GHz band. Alternatively, although there are some restrictions, the AP 101 and the STA 102 may be configured to establish links through a plurality of different channels included in the same frequency band. For example, the AP 101 and the STA 102 may be configured to establish a plurality of communication links for Multi-Link communication, with W52 and 36 ch in the 5 GHz band as a first link and W53 and 60 ch in the 5 GHz band as a second link.

Although there are some restrictions, links in the same frequency band and links in different frequency bands may coexist. For example, the AP 101 and the STA 102 may establish a link through a 35 ch in the 60 GHz band and a link through a 15 ch in the 6 GHz band, in addition to the link 103 through the 2 ch in the 60 GHz band.

Advantages of establishing a plurality of links will now be described. When the AP 101 and the STA 102 establish a plurality of links on different channels, even if one channel is congested, the AP 101 can communicate with the STA 102 on another channel. Therefore, in communication with the STA 102, a decrease in throughput and communication delay can be prevented.

Next, constraints on Multi-Link communication in the present embodiment will be briefly described. For example, the 45 GHz band and the 60 GHz band, which are millimeter wave bands, are characterized in that throughput can be improved because a wide bandwidth can be secured, but are also characterized in that communication is easily interrupted due to strong directivity of radio waves. For example, reference numeral 110 in Fig. 1 indicates a communication area in the 60 GHz band. When a user who owns the STA 102 moves from one room to another, communication through the link 104 in the 60 GHz band may be interrupted. Reference numeral 100 in Fig. 1 indicates a communication area in the 5 GHz band. Radio waves in the 5 GHz band are characterized in that they are less attenuated by moisture and obstacles than millimeter waves, they more easily propagate around obstacles than millimeter waves because of diffraction, and they have a wider communication area than those in the millimeter wave band. Therefore, even when a user who owns the STA 102 moves from one room to another, communication can be performed with stability.

In view of the characteristics described above, the present embodiment provides a mechanism for setting up Multi-Link communication such that when establishing Multi-Link communication, one or more links in a frequency band different from the millimeter wave band are at least included. In other words, the present embodiment provides a mechanism that suppresses the establishment of Multi-Link communication in the millimeter wave band alone. The mechanism will now be described in detail.

### <Hardware Configuration of Communication Apparatus>

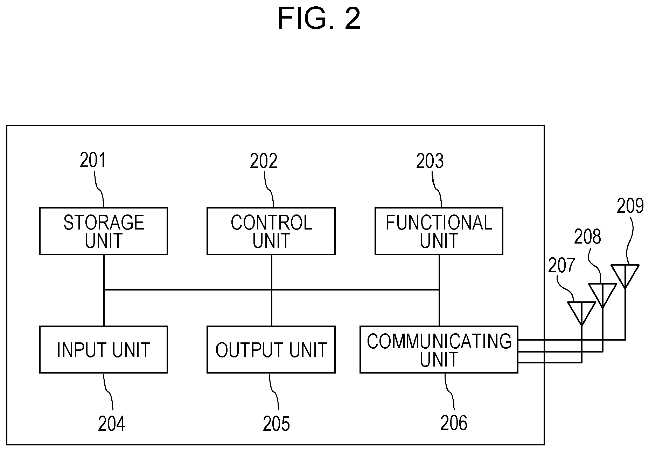

Fig. 2 illustrates an exemplary hardware configuration of communication apparatuses (AP and STA). As an exemplary hardware configuration, a communication apparatus includes a storage unit 201, a control unit 202, a functional unit 203, an input unit 204, an output unit 205, a communicating unit 206, and antennas 207 to 209.

The storage unit 201 is constituted by one or both of a ROM and a RAM. The storage unit 201 stores programs for performing various operations (described below), and also stores various types of information, such as communication parameters for wireless communication. RAM is an abbreviation for Random Access Memory, and ROM is an abbreviation for Read Only Memory. Other than memories, such as a ROM and a RAM, a storage medium, such as a hard disk or a nonvolatile storage device like a solid state drive (SSD), may be used as the storage unit 201.

The control unit 202 is constituted, for example, by a processor, such as a CPU or an MPU, an application-specific integrated circuit (ASIC), a digital signal processor (DSP), or a field-programmable gate array (FPGA). CPU is an abbreviation for Central Processing Unit, and MPU is an abbreviation for Micro Processing Unit. The control unit 202 controls the entire apparatus by executing a program stored in the storage unit 201 and operating a hardware circuit, such as an ASIC. The control unit 202 may be configured to control the entire apparatus by working together with a program stored in the storage unit 201 and an operating system (OS).

The control unit 202 controls the functional unit 203 to perform predetermined processing, such as imaging, printing, and projection. The functional unit 203 is hardware for the apparatus to perform predetermined processing. For example, when the communication apparatus is a camera, such as a digital still camera, or a smartphone including a camera, the functional unit 203 is an imaging unit and performs imaging processing of surrounding images through a camera unit (not illustrated) included in the communication apparatus. Also, for example, when the communication apparatus is a printer, the functional unit 203 is a printing unit and performs print processing on a sheet, such as paper, on the basis of print data obtained from outside through wireless communication. For example, when the communication apparatus is a projector or smart glasses, the functional unit 203 is a projecting unit and performs projection processing of image data or video data obtained from outside through wireless communication. In the case of smart glasses, the projection surface is, for example, the retina of an end user. Data processed by the functional unit 203 may be data stored in the storage unit 201, or may be data communicated with other APs or STAs through the communicating unit 206 (described below). The communication apparatus, such as the AP 101, can also provide a network storage function, such as a network attached storage (NAS). This function is provided as a Web service, such as a network storage service, to other communication apparatuses. For example, the communication apparatus, such as an STA, connects to a network storage service provided by, for example, APs 101 to 103 using a protocol, such as SMB, FTP, or WebDAV. The communication apparatus, such as an STA, uploads a file to the storage service, or downloads a file from the storage. Data communication, such as the uploading and downloading, is implemented by communicating UHR PPDUs between apparatuses.

The input unit 204 accepts various operations from the user. The output unit 205 performs various types of output to the user. The output performed by the output unit 205 includes at least one of, for example, display on a screen, audio output from a speaker, and vibration output. Like a touch panel, a single module may provide both the input unit 204 and the output unit 205.

The communicating unit 206 controls wireless communication conforming to the series of IEEE 802.11 standards and controls IP communication. In the present embodiment, the communicating unit 206 can transmit and receive UHR PPDUs, which are radio frames of the UHR standard, and PPDUs conforming to standards preceding the UHR standard, by working together with the antennas 207 to 209. The antennas 207 to 209 are antennas capable of transmitting and receiving signals in at least one of the frequency bands, such as the sub-GHz band, the 2.4 GHz band, the 5 GHz band, the 6 GHz band, the 7 GHz band, and the 60 GHz band.

When the communication apparatus conforms to, for example, the NFC standard, the Bluetooth standard, or the wire communication standard described above, the communicating unit 206 may be configured to control wireless communication or wire communication conforming to these communication standards. When the communication apparatus is capable of performing wireless communication conforming to a plurality of communication standards, the communication apparatus may be configured to include separate communicating units and antennas corresponding to different communication standards. The antennas 207 to 209 are antennas capable of communicating in the 2.4 GHz band, the 5 GHz band, the 6 GHz band, the 45 GHz band, and the 60 GHz band. Although the STA 102 includes three antennas in the present embodiment, it may include two antennas or may include a different antenna for each frequency band. When the STA 102 includes a plurality of antennas, the STA 102 may include the communicating unit 206 corresponding to each antenna.

An antenna included in the AP 101 and supporting millimeter waves is a phased array antenna, so as to perform beamforming communication with an STA, such as the STA 102. When performing downlink communication with the STA 102 through the link 104 in the 60 GHz illustrated in Fig. 1, the AP 101 adjusts the phase of current flowing through the phased array antenna, and emits radio waves with directivity in the direction of the STA 102. This processing allows radio waves in the millimeter wave band, which are easily attenuated, to be efficiently transmitted to the STA 102. Like the AP, the STA can also use a phased array antenna as an antenna that supports millimeter waves. The STA may be configured to have a plurality of antennas that support millimeter waves at a plurality of locations, such as on the side and back surface of the housing of the STA and on the display side of the STA, so as to widen the angle at which radio waves can be transmitted and received.

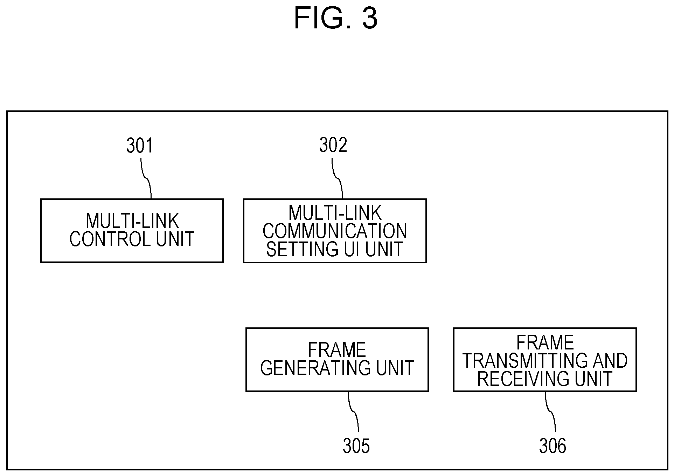

A functional configuration of communication apparatuses will now be described using Fig. 3. Communicating apparatuses, such as the AP 101 and the STA 102, include functional units, such as a multi-link control unit 301, a multi-link communication setting UI unit 302, a frame generating unit 305, and a frame transmitting and receiving unit 306.

The multi-link control unit 301 is a functional block configured to control communication start processing for establishing one or more links the communication apparatus uses in wireless communication with a counterpart device, link addition and deletion processing after the start of communication, and communication end processing that deletes all links. Connection processing includes Authentication processing, Association processing, and 4-Way-Hand-Shake (4WHS) processing. A counterpart device to the AP 101 is an STA, such as the STA 102, and a counterpart device to the STA 102 is an AP, such as the AP 101.

The multi-link communication setting user interface (UI) unit 302 provides a setting screen as a UI that allows the user to enter settings for Multi-Link communication. The UI unit 302 is a functional block that accepts a user operation on the setting screen through the input unit 204 and stores the settings in the storage unit 201 as operation settings for the communication apparatus.

The frame generating unit 305 is a block that generates UHR PPDUs which are radio frames for communicating externally. The frame transmitting and receiving unit 306 transmits a radio frame generated by the frame generating unit 305 and receives a radio frame from an apparatus at the other end. The STA 102 transmits a Probe Request frame, an Association Request frame, and a data frame to the AP. The STA 102 also transmits an Authentication Request frame and other frames for connection processing to the AP.

The AP 101 transmits a Beacon frame, a Probe Response frame, an Association Response frame, and a data frame to the STA 102. The AP 101 also transmits an Association Request frame, an Authentication Request frame, and other frames for connection processing to the STA.

### <Connection Processing>

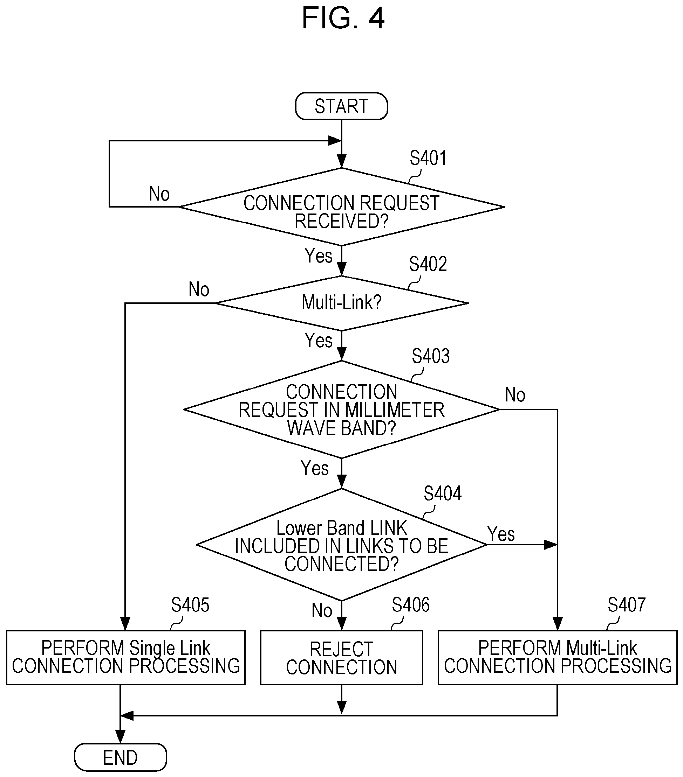

Connection processing according to the first embodiment will now be described using a flow chart in Fig. 4. The flow chart in Fig. 4 summarizes a procedure of connection processing the AP 101 performs with an STA, such as the STA 102, which is a counterpart device. Each step in Fig. 4 is repeatedly performed while the AP 101 is providing the function of an AP.

Each step illustrated in each flow chart is performed when the processor of the control unit 202 in the AP 101 executes a computer program stored in the storage unit 201. Some processing, such as transmission and modulation, is implemented when the processor of the control unit 202 works together with various processors, the ASIC, the DSP, and the FGPA constituting the communicating unit 206 and also with the ASIC, the DSP, and the FPGA constituting the control unit 202. When a subject that performs processing is to be clarified, the processing will be described, with any of the functional units illustrated in Fig. 3 as the subject.

In S401, the AP 101 determines whether a connection request from an STA, such as the STA 102, has been received. If the connection request has been received, the AP 101 advances the process to S402, whereas if the connection request has not been received, the AP 101 waits for the connection request. The connection request from the STA is, for example, an Association Request frame. When receiving such a frame, the AP 101 determines that the connection request has been received.

In S402, the multi-link control unit 301 determines whether the STA requests Multi-Link connection. Specifically, if the received connection request frame includes a Multi-Link element, the control unit 301 determines that the STA requests Multi-Link connection. On the other hand, if the received connection request frame does not include a Multi-Link element, the control unit 301 determines that the STA does not request Multi-Link connection.

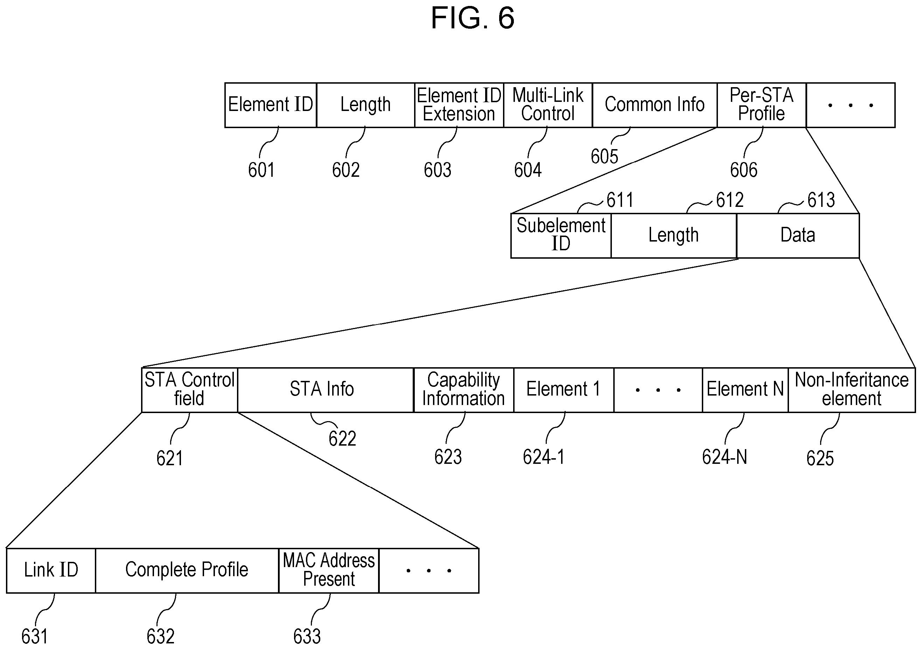

A Multi-Link element can include information that identifies other links. A Multi-Link element will now be described using Fig. 6. Fig. 6 is a schematic diagram for explaining a Multi-Link element.

A Multi-Link element includes an Element ID 601, a Length 602, and an Element ID Extension 603. The Multi-Link element also includes a Multi-Link Control 604, a Common Info 605, and a Per-STA Profile 606. In the present embodiment, the number of Per-STA Profiles 606 is equal to the number obtained by subtracting one from the number of links configured between the STA and the AP.

The Element ID 601 and the Element ID Extension 603 store information that identifies this Element as a Multi-Link element. In the present embodiment, an Infromation Element in which the Element ID 601 stores "255" and the Element ID Extension 603 stores "107" is a Multi-Link element. However, the present invention is not limited to this. Hereinafter, an Infromation Element will be abbreviated and also simply referred to as IE.

The Length 602 stores the length of the entire Multi-Link element.

The Multi-Link Control 604 includes a bit map indicating what information is contained in a Common Info Field (described below) and a Type field indicating the type of the Multi-Link element. Also, on the basis of a value indicated by the Multi-Link Control, whether, for example, an MLD MAC Address is included in the Multi-Link element is indicated.

The Common Info field 605 includes information common to all links. The Per-STA Profile 606 may or may not be included in the Multi-Link element depending on the Type in the Multi-Link Control 604 described above. The Per-STA Profile 606 includes information for each link.

Details of the Per-STA Profile 606 will now be described. The Per-STA Profile 606 includes a Subelement ID 611, a Length 612, and a Data 613. The Subelement ID 611 is set to "1" indicating that the Per-STA Profile 606 is a Per-STA Profile. The length of the entire Per-STA Profile is set in the Length 612. Further detailed information on each link is set in the Data 613.

The Data 613 includes an STA Control field 621, an STA Info 622, a Capability Information 623, and Element 1 624-1 to Element N 624-N. The Data 613 also includes a Non-Inferitance element 625.

The STA Control field 621 includes a Link ID 631, a Complete Profile 632, an MAC Address Present 633, and other fields. The Link ID 631 indicates a link ID. For example, in the present embodiment, the Link ID 631 stores 1 when indicating the link 103 in Fig. 1, and stores 2 when indicating the link 104 in Fig. 1.

The Complete Profile 632 stores a flag indicating whether to provide the entire information about links. For example, when an ML Probe Request transmitted by the STA 102 specifies that the entire information about links for the AP be requested, the AP 101 sets the Complete Profile 632 to 1. The AP 101 then includes, in the field following 622, detailed information that is unique to each link included in a Beacon or the like transmitted through the link.

When the Complete Profile 632 is set to 0, the communication apparatus can omit part of or the entire information stored in the Elements 1 to N.

The MAC Address Present 633 stores information indicating whether to include information indicating an MAC address. Other fields following 633 are fields indicating whether to include other individual information, such as beacon interval information. That is, the field 621 indicates the type of data stored in the STA Info 622 and thereafter.

In the present embodiment, when transmitting a Probe Request/Response, the AP 101 and the STA 102 transmit an MAC frame including a Multi-Link element in which the Complete Profile 632 is set to 0.

When transmitting an ML Probe Response, the AP 101 transmits an MAC frame including a Multi-Link element in which the Complete Profile 632 is set to 1.

ML Probe Request/Response are MAC frames communicated to obtain information about AP/STA in other frequency bands operating in Multi-Link. Note that the ML Probe Request stores, instead of the Complete Profile 632, a Complete Profile Requested indicating that detailed information is to be requested. The details will be described later on.

The Element 1 624-1 to Element N 624-N store Element information unique to each link.

An example of 624-1 to 624-N will now be described. Assume that a communication apparatus that supports the operation in both the millimeter wave band and the 5 GHz band includes a Multi-Link element in an MAC frame transmitted in the 5 GHz band. For example, the communication apparatus can include, in 624-1 to 624-N for 5 GHz, information on millimeter waves and information on other links. Here, for example, an Antenna Sector ID Pattern element indicating the result of beamforming performed using millimeter waves may be stored in one of 624-1 to 624-N. An Antenna Sector ID Pattern Element indicating a sector number selected in SLS may be stored in one of 624-1 to 624-N. Note that SLS will be described later on. The sector number is a result obtained by beamforming performed using millimeter waves. The Element 1 to Element N indicating individual information on each link may include a wide variety of other information.

The STA 102 receives, from an AP, an ML Probe Response including a Multi-Link element in which information on each link provided by the AP is stored in the Per-STA Profile field 606. This processing allows the STA 102 to acquire information on each link provided by the AP.

Referring back to Fig. 4, although the case of determining whether a Multi-Link element has been added to the radio frame for the connection request is described as an example in S402, the configuration is not limited to this. The AP 101 may be configured to determine that Multi-Link connection is requested when a Multi-Link element has been added and information on other links is included. The radio frame for the connection request is an Association Request frame or a Re Association Request frame. The frame includes a link ID as information that identifies a link, and the AP 101 can identify the operating frequency band and the channel for the corresponding link from the link ID. That is, the AP 101 can identify the operating frequency band in which the link of the connection request is operating.

First, the case of not determining that Multi-Link connection has been requested will be described. In S405, the AP 101 performs connection processing using a link on a wireless communication channel through which the connection request has been received. Upon completion of the connection processing, application data, such as videos, moving images, and sounds, can be communicated between the AP 101 and an STA which has transmitted the connection request, such as the STA 102. If an error occurs in the series of connection processing, the AP 101 notifies the STA of information indicating the nature of the error.

The AP 101 may be configured such that if the wireless communication channel on which the connection request has been received is a wireless communication channel in the millimeter wave band, the AP 101 can reject the connection request on only the millimeter wave channel.

PPDUs in the millimeter wave band conforming to the UHR standard and PPDUs in the millimeter wave band conforming to the 802.11ay standard formulated in the year 2021 may have different formats. In view of this case, the AP 101 may be configured to allow the connection request only when determining that the format of the connection request frame conforms to an 802.11ay format which assumes single communication using millimeter waves. That is, when a connection request conforming to the 802.11ay is received, a link in a single millimeter wave band can be established.

In this case, the AP 101 may reject a connection request that has been transmitted in a PPDU conforming to the UHR format that allows Multi-Link communication, and that attempts to establish a single connection using only millimeter waves.

Next, processing performed when the control unit 301 determines that Multi-Link communication has been requested will be described. In S403, the control unit 301 determines whether the frequency band in which the connection request has been received is a millimeter wave frequency band. If determining that the frequency band in which the connection request has been received is a millimeter wave band, such as the 45 GHz band or the 60 GHz band, the control unit 301 advances the process to S404. On the other hand, if determining that the frequency band in which the connection request has been received is not a millimeter wave band, such as the 45 GHz band or the 60 GHz band (i.e., if determining that the frequency band is a Lower Band), the control unit 301 advances the process to S407.

In S404, the control unit 301 determines whether other links to be connected indicated by the connection request include a link operating in a frequency band different from the millimeter wave band (i.e., Lower Band). If determining that other links to be connected include a link operating in a frequency band different from the millimeter wave band (i.e., Lower Band), the control unit 301 advances the process to S407. On the other hand, if determining that other links to be connected do not include a link operating in a frequency band different from the millimeter wave band (i.e., Lower Band), the control unit 301 advances the process to S406. Not including a link operating in a Lower Band means that all links to be connected indicated by the connection request are operating in the millimeter wave band.

In S406, the control unit 301 transmits, to the STA that has transmitted the connection request, a response indicating that the connection is rejected.

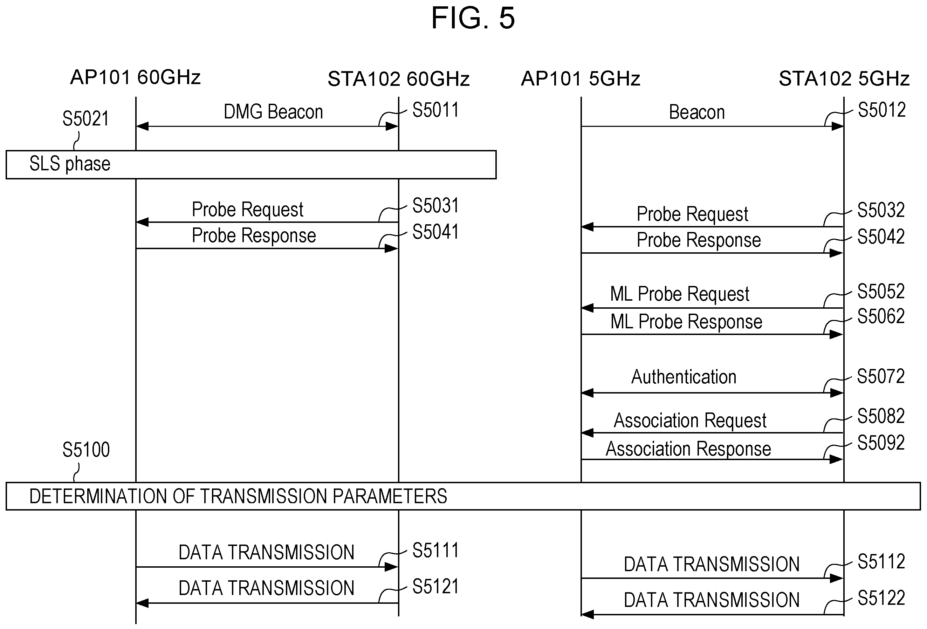

In S407, the control unit 301 performs connection processing for Multi-Link communication. Upon completion of the connection processing, the series of processing ends. Details of the connection processing will be described later on using a sequence diagram in Fig. 5.

The present embodiment assumes that when rejecting the connection, the AP 101 responds with an Association Response frame in which a Status Code indicating rejection is set, as a response to an Association Request frame. However, the response is not limited to this. The AP 101 may return a Status Code of rejection in some radio frame. To reject a connection retry from the STA 102, the AP 101 may notify the STA 102 of a Probe Response including connection rejection, for a certain period of time, as a response to a Probe Request transmitted from the STA 102. An ML Probe Response, which is a response to an ML Probe Request, may include information same as or similar to that described above. This can be done by further adding an IE, such as an MBO-OCE defined by the Wi-Fi (registered trademark) Alliance, to a response frame, such as a Probe Response. By including an attribute, such as an Association Disallowed Indication, in the IE, the AP 101 can notify the STA 102 of connection rejection. MBO-OCE is an abbreviation for Multiband Operations-Optimized Connectivity information element.

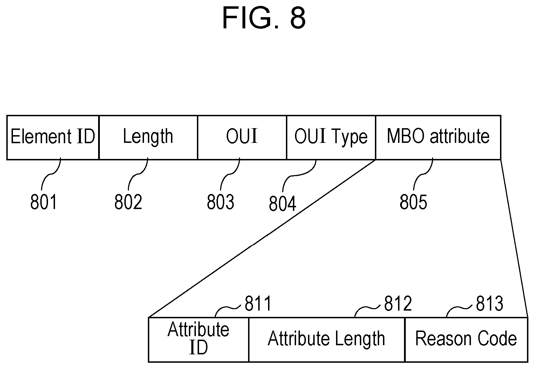

A configuration of an MBO-OCE will now be described in detail using Fig. 8. Fig. 8 is a schematic diagram for explaining an MBO-OCE. An MBO-OCE IE includes an Element ID 801, a Length 802, an OUI 803, an OUI Type 804, and an MBO attribute 805. The MBO-OCE is an IE in which "0xDD" is set for the Element ID 801, "0x50-6F-9A" is set for the OUI 803, and "0x16" is set for the OUI Type.

"0xDD" for the Element ID indicates vendor specific information in the IEEE 802.11. "0x50-6F-9A" for the OUI indicates that the IE relates to the Wi-Fi Alliance. OUI is an abbreviation for Organizationally Unique Identifier, and "0x50-6F-9A" indicates a vendor ID assigned by the Wi-Fi Alliance. Type information that identifies further details is stored in the OUI Type, and "0x16" indicates that the element is an MBO-OCE IE.

The Length 802 indicates the length of the entire IE. The MBO attribute 805 includes an Attribute ID 811, an Attribute Length 812, and a Reason Code 813. In the present embodiment, the AP 101 sets "0x04" for the MBO attribute 805. "0x04" indicates that the attribute is an Association Disallowed attribute. This attribute indicates that connection is to be rejected. The Attribute Length 812 indicates the length of the Attribute. The Reacon Code 813 that follows stores information indicating a reason for not allowing the connection. In the present embodiment, for example, 0x01 may indicate an Unspecified Reason.

Each step of communication including procedures before and after connection processing will now be described using a sequence diagram in Fig. 5. Fig. 5 illustrates an exemplary communication sequence performed between the STA 102 and the AP 101.

The AP 101 can operate an Affiliated AP on each of three or more channels, including at least one or more millimeter wave bands and one or more Lower Bands. For explanation, Fig. 5 illustrates an example in which the AP 101 operates an Affiliated AP belonging to an AP MLD on a channel in the 60 GHz band and a channel in the 5 GHz band.

The AP 101 transmits a Beacon in the 60 GHz band, which is a millimeter wave band, and the 5 GHz band, which is a Lower Band (S5011 and S5012).

The STA 102 also transmits a DMG Beacon in the 60 GHz band (S5011). DMG is an abbreviation for Directional Multi Gigabit.

On the basis of transmission and reception of the DMG Beacon, the AP 101 and the STA 102 perform Sector level Sweep (SLS) in the 60 GHz band (S5021). By performing the SLS, the AP 101 and the STA 102 estimate their relative positions. On the basis of the estimated values, the AP 101 and the STA 102 each set antenna directivity in the direction of the counterpart device and communicate a Probe Request and a Probe Response in the 60 GHz band (S5031 and S5041).

The STA 102 and the AP 101 also communicate a Probe Request and a Probe Response in the 5 GHz band (S5032 and S5042).

Due to space limitations, the following description illustrates an example where setup processing for Multi-Link communication is performed on an operating channel in the 5 GHz band. However, the present invention is not limited to this. If the STA 102 finds the opposite AP 101 on an operating channel in the 60 GHz band, the setup processing for Multi-Link communication may be performed on the operating channel in the 60 GHz band.

Next, the STA 102 and the AP 101 communicate an ML Probe Request (S5052) and an ML Probe Response (S5062) to obtain information on each link. The ML Probe Request includes a Probe Request Multi-Link element. In S5052 and S5062, frames are exchanged to obtain detailed link information that could not be acquired from the Probe Response. For example, if this connection is not the first one and parameters have been exchanged during connections in the past, the frame exchanges in S5052 and S5062 may be skipped. Here, the STA 102 and the AP 101 communicate an ML Probe Request including a Multi-Link element (S5052) and an ML Probe Response including a Multi-Link element (S5062).

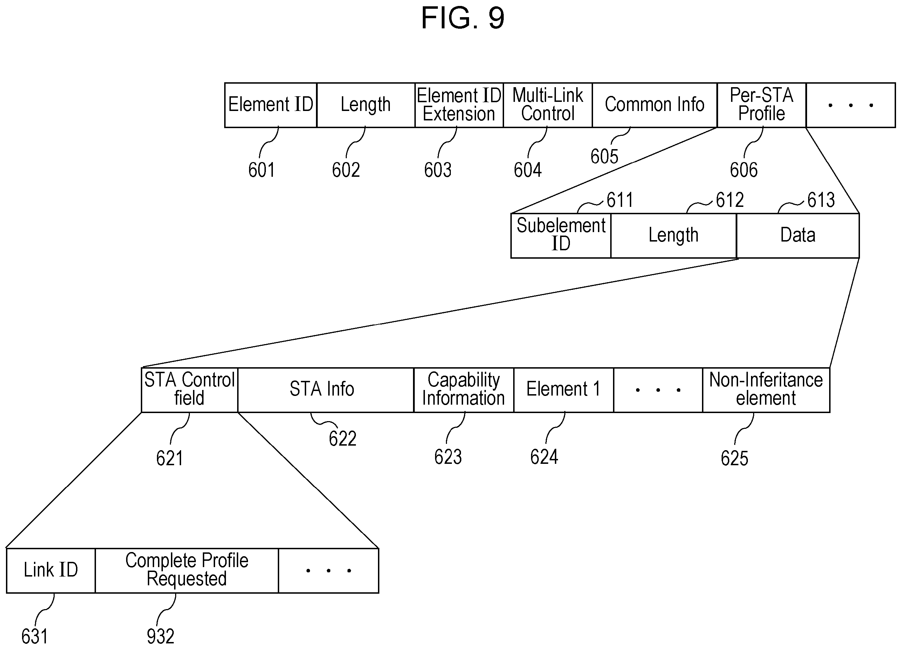

The STA 102 includes, in the ML Probe Request, a Probe Request Multi-Link element, which is a Multi-Link element of a type different from the Multi-Link element illustrated in Fig. 6. The Probe Request Multi-Link element will now be described using Fig. 9. The description of the configuration same as, or similar to, that illustrated in Fig. 6 will be omitted. Differences from Fig. 6 are that a Complete Profile Requested 932 requesting a Complete Profile is included, instead of the Complete Profile 632, and that a field corresponding to 633 is omitted. By setting "1" to the Complete Profile Requested 932, the STA 102 indicates that detailed information on an Affiliated AP is to be requested.

As a response to the ML Probe Request, the AP 101 sets the Complete Profile of the Multi-Link element to 1 and transmits the ML Probe Response storing detailed information on each link to the STA 102. In the example illustrated in Fig. 5, the AP 101 transmits, in S6062, a response including detailed information on Affiliated APs operating in the 60 GHz band. If the AP 101 is operating Affiliated APs in other operating frequency bands, the AP 101 transmits the ML Probe Response further including detailed information on these Affiliated APs.

The Multi-Link element can be included in the Probe Request, the Probe Response, and the Beacon described above. When the Multi-Link element is included in the Probe Request and the Probe Response described above, the communication apparatuses, such as an AP and an STA, sets the Complete Profile to 0. In this case, some information is omitted, as compared to when the Complete Profile is set to 1. This makes it possible, without significantly increasing the size of data to be included in the Beacon or the response, to notify the STA 102 of information indicating, for example, that Multi-Link communication is possible. The Beacon and the Probe Request/Response are used in preliminary scan processing. Therefore, it is possible to notify the counterpart device of whether, for example, Multi-Link communication is possible in a preliminary scan phase.

Next, the AP 101 and the STA 102 carry out each step of Authentication to perform authentication between the AP 101 and the STA 102 (S5072).

Next, the STA 102 transmits an Association Request as a connection request to the AP (S5082). The connection request transmitted here may be a Re Association Request.

The STA 102 includes, in the Association Request, information that identifies links to be connected through which Multi-Link communication is to be established. In the present embodiment, by using the Multi-Link element described with reference to Fig. 6, the STA 102 notifies the AP of link IDs for which connection is requested. More specifically, by storing a plurality of link IDs of links to be connected in the Per-STA Profile of the Multi-Link element, the STA 102 indicates links through which the connection is requested to be established.

Upon receiving the Association Request, the AP 101 responds with an Association Response (S5092).

The AP 101 may accept setup processing for Multi-Link communication on a radio channel in a millimeter wave band, such as the 60 GHz band. In this case, the Association Request, which is an authentication request, is transmitted on a radio channel in the millimeter wave band. Here, the AP 101 determines whether links to be connected described with reference to Fig. 4 are only those in the millimeter wave band. This processing can prevent a Multi-Link configuration from being made only in the millimeter wave band.

Next, the AP 101 and the STA 102 perform communication parameter determination processing (S510). For example, on the basis of connection information stored in advance, the STA 102 performs 4Way handshake to generate a key for encrypted communication, and determines the operating frequency band, radio channel, and bandwidth for each link used in communication with the AP 101. The communication parameter determination processing may include communication parameter sharing processing using a protocol for parameter exchange, such as the Wi-Fi Sinple Config (WSC) or Device Provisioning Protocol (DPP). The communication parameter determination processing may include encryption key sharing processing between the AP and the STA, based on Opportunistic Wireless Encryption (OWE).

Upon completion of the authentication and the parameter determination processing that includes key exchange for encryption and determination of the operating frequency used in each link, the STA 102 and the AP 101 become ready to communicate data frames.

When ready to communicate data frames, the AP 101 and the STA 102 communicate application data, such as videos, moving images, and sounds (S5111, S5121, S5112, and S5122). Through the procedure described above, a connection for Multi-Link communication can be established between the AP 101 and the STA 102.

As described above, when a connection request for Multi-Link connection is received from the STA 102, the AP 101 can prevent a Multi-Link connection configured only by links in the millimeter wave band. Therefore, in a Multi-Link connection, a link in the Lower Band is always included and this can improve reliability of communication between the AP and the STA. If it is determined that the frame format of a connection request for a single connection, which is not Multi-Link, conforms to the IEEE 802.11ay format that assumes single communication using millimeter waves, a connection through one link in the millimeter wave band can be permitted. Therefore, it is possible without any problem to connect an STA and an AP that support existing millimeter wave bands, for example, in the IEEE 802.11ay but do not support Multi-Link communication.

### <Second Embodiment>

In the first embodiment, an example has been described in which the AP 101 determines whether to permit connection. In a second embodiment, a mechanism will be described in which, on the basis of link information received by the STA 102, links used in Multi-Link communication always include a link in the Lower Band.

For example, the hardware configuration and the functional configuration of a communication apparatus according to the second embodiment, and the procedure of Multi-Link connection described using Fig. 5, are the same as or similar to those in the first embodiment. A description will now be given, with the description of processing same as or similar to that in the first embodiment omitted where appropriate.

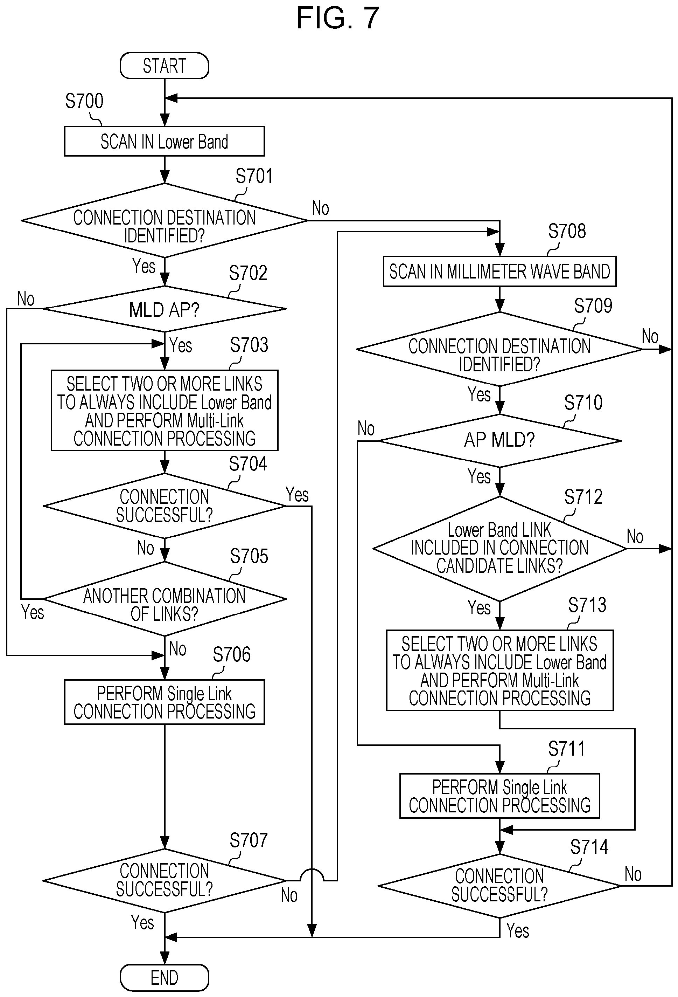

The second embodiment differs from the first embodiment in that restrictions are placed when the STA 102 selects links to be used in Multi-Link communication. Connection processing according to the second embodiment will now be described in detail using the flow chart in Fig. 7. The flow chart in Fig. 7 summarizes a procedure of connection processing the STA 102 performs with an AP, such as the AP 101, which is a counterpart device. The steps in Fig. 4 are performed when a connection to the AP is necessary, such as when the wireless communication function of the STA 102 is changed from a disabled state to an enabled state, or when a connection to the currently connected AP is interrupted and another AP is searched for again.

Each step illustrated in the flow chart is performed when the processor of the control unit 202 in the STA 102 executes a computer program stored in the storage unit 201. Some processing, such as transmission and modulation, is implemented when the processor of the control unit 202 works together with various processors, the ASIC, the DSP, and the FGPA constituting the communicating unit 206 and also with the ASIC, the DSP, and the FPGA constituting the control unit 202. When the subject that performs processing is to be clarified, the processing will be described, with any of the functional units illustrated in Fig. 3 as the subject.

In S700, the STA 102 performs scan processing that searches for APs in the Lower Band. There are two types of scan processing: active scanning and passive scanning. The present embodiment assumes that both types of scan processing are performed. In active scanning, the STA 102 transmits a Probe Request and receives a Probe Response as a response thereto, so as to confirm that there is an AP in the vicinity.

In passive scanning, the STA 102 receives a Beacon or an FILS Discovery Frame transmitted by a neighboring AP, so as to confirm that there is an AP in the vicinity. FILS is an abbreviation for Fast Initial Link Setup.

Another technique of passive scanning is to perform, for example, processing that listens to a Probe Response transmitted by a neighboring AP to another STA. The STA 102 confirms the presence of neighboring APs by performing these two types of scan processing at regular intervals, such as every 100 ms, on channels in the 2.4 GHz band and the 5 GHz band supported by the STA 102. Also, the STA 102 confirms the presence of neighboring APs operating in the 6 GHz band by performing the two types of scan processing at regular intervals, such as every 100 ms, on Preferred Scanning Channels defined by 6 GHz.

The STA 102 generates a list in which APs whose presence has been confirmed by scanning are listed as connection candidates. The list stores information indicating whether information obtained from APs includes a Multi-Link element and information on its content.

In S701, the STA 102 determines whether a connection destination has been identified from the list of connection destination candidates obtained as a result of the scanning. Specifically, if an AP whose connection history is managed by the OS of the STA 102, that is, an AP to which the STA 102 has been connected in the past, is found on the list, the AP is identified as a connection destination. The output unit 205 may be configured to display a list of connection destination candidates (not illustrated) to accept a user operation on the list, so that a connection destination is identified.

The list of connection candidates also lists APs other than those that were able to receive a Beacon or a Probe Response through scan processing. The list of connection candidates may list APs included in a Multiple BSSID Element added to the Beacon or the Probe Response, or APs based on BSSIDs included in a Reduced Neighbor Report Element. BSSID is an abbreviation for Basic Service Set Identifie. Hereinafter, Reduced Neighbor Report Element may be abbreviated as RNR Element.

The list of connection candidates may list information on AP MLDs identified on the basis of AP MLD IDs included in the Multi-Link element, or may list AP information received in an FILS Discovery Frame. As for an AP whose information has been indirectly received from a neighboring AP, a determination as to whether to list the AP as a connection candidate may be made after the presence of the AP is confirmed. Specifically, an AP may be added to the list of connection candidates only when the presence of the AP is confirmed by scanning on the channel again, or only when a Probe Request specifying the SSID of the AP is transmitted and a response is received. SSID is an abbreviation for Service Set Identifier.

In S702, the STA 102 determines whether the identified connection destination is an MLD AP. Specifically, the STA 102 refers to the list of connection candidates and determines whether a Multi-Link element is included in information obtained from the identified connection destination AP. Next, if determining that the Multi-Link element is included, the STA 102 determines that the identified connection destination is an AP MLD and advances the process to S703. On the other hand, if determining that the Multi-Link element is not included, the STA 102 determines that the identified connection destination is not an AP MLD and advances the process to S706.

In S703, the control unit 301 of the STA 102 selects links to be used in Multi-Link communication with the identified connection destination, and performs connection processing. Specifically, the control unit 301 of the STA 102 transmits the ML Probe Request described in S5052 to the identified connection destination, receives the ML Probe Response, and acquires detailed information on other links that can be used in Multi-Link communication. The control unit 301 of the STA 102 also acquires information on the RNR Element included, for example, in the ML Probe Response.

In the RNR Element transmitted by the AP MLD, information on one or more Affiliated APs corresponding to the AP MLD and information on neighboring APs are listed. The information includes information on the operating frequency bands of the Affiliated APs and information on radio channels. Other information, such as identification information on SSIDs, may also be included.

To distinguish between neighboring APs and Affiliated APs that can be selected as links for Multi-Link communication, an MLD ID is associated with information on Affiliated APs. Links for which 0 is specified as the MLD ID represent other links that can be used in Multi-Link communication.

On the basis of the acquired information, the STA 102 generates a list that associates link IDs, operating frequency bands, and radio channels of Affiliated APs provided by the AP MLD, which is the identified connection destination. The list will be described using Table 1. Here, as an example, a list is illustrated that is generated when the AP MLD, which is the identified connection destination, supports pentaband.

**[Table 1]**

| Link ID | Operating Frequency Band | Channel |
|---|---|---|
| 1 | 2.4 GHz | 6 ch |
| 2 | 5 GHz | 36 ch |
| 3 | 6 GHz | 15 ch |
| 4 | 45 GHz | 2 ch |
| 5 | 60 GHz | 1 ch |

The control unit 301 selects two or more links as connection candidate links, on the basis of, for example, the channel on which the ML Probe Request has been transmitted, information on the frequency band supported by the control unit 301 and allowing the STA to operate, and hardware constraints such as the number of antennas. The STA 102 includes, in connection candidate links, one or more links corresponding to the Lower Band. That is, in the present embodiment, control is performed such that Multi-Link connection processing with the combination of Link IDs "4" and "5" is not performed.

After selection of connection candidate links is completed, Multi-Link setup processing is attempted. Specifically, the control unit 301 performs the Authentication processing illustrated in Fig. 5. The control unit 301 then transmits an Association Request including a Multi-Link element in which information indicating link IDs corresponding to the selected connection candidates is stored. Then, the connection processing illustrated in Fig. 5 is performed. The link IDs stored in the Multi-Link element included in the Association Request serve as information that identifies links through which connection is to be established. When the STA 102 is capable of establishing one link in the Lower Band and one link in the millimeter wave band, the STA 102 selects a plurality of links with a combination of the Lower Band and the millimeter wave band as connection candidate links.

In S704, the control unit 301 determines whether the connection has been successful. If the series of connection processing is completed and the connection is successful, the control unit 301 ends the series of connection processing. If an error occurs in any step of the series of connection processing, the control unit 301 determines that the connection is not successful and advances the process to S705. In S705, the determining unit 301 determines whether another combination can be selected, and if determining that another combination can be selected, the determining unit 301 advances the process to S703 and retries Multi-Link connection processing using the combination. For example, the determining unit 301 selects a combination of Lower Bands, such as 2.4 GHz and 5 GHz bands, as connection candidate links and retries connection processing. On the other hand, the determining unit 301 determines whether another combination can be selected, and if determining that another combination cannot be selected, the determining unit 301 advances the process to S706.

In S706, the STA 102 performs single link connection processing in any frequency band categorized as a Lower Band. In S707, the STA 102 determines whether the connection has been successful. If the connection has been successful, the STA 102 ends the series of processing, whereas if the connection has failed, the STA 102 advances the process to S708. If determining in S702 that the identified connection destination is not an AP MLD, the STA 102 may perform single link connection processing on a channel of the identified connection destination.

Processing performed when the STA 102 cannot connect to an AP in the scanning in the Lower Band will be described in S708 and its subsequent steps.

In S708 and S709, the STA 102 performs scanning in the millimeter wave band and processing for identifying a connection destination. The description of the processing is omitted, as it is the same as or similar to that in S701 and S702. In the processing, a list of APs found by scanning in the millimeter wave band and neighboring APs obtained from the found APs is generated, and a connection destination is appropriately identified from the list. If a connection destination is not identified, the STA 102 advances the process to S700 and performs scan processing to search for other connection candidates.

In S710, the control unit 301 determines whether the identified connection destination is an AP MLD. The processing performed here is the same as or similar to that in S702. If determining that the identified connection destination is an AP MLD, the control unit 301 advances the process to S711, whereas if determining that the identified connection destination is not an AP MLD, the control unit 301 advances the process to S712.

In S711, the STA 102 performs single link connection processing on a channel of the identified connection destination. For example, a connection candidate that is not an AP MLD found by scanning using millimeter waves is expected to be an AP that conforms to the IEEE 802.11ay. Therefore, the STA 102 simply needs to perform single link connection in accordance with the connection procedure of the IEEE 802.11ay.

In S712, the control unit 301 determines whether the connection candidate links include a link in the Lower Band. If determining that the connection candidate links include a link in the Lower Band, the control unit 301 advances the process to S713. On the other hand, if determining that the connection candidate links do not include a link in the Lower Band, the control unit 301 performs scan processing for other connection candidate APs without connecting to the identified connection destination. This processing of not connecting to the identified connection destination means that when the connection candidate links of the connection candidate APs are only links in the millimeter wave band, the control unit 301 controls the STA 102 not to transmit a connection request to the AP.

Further details of determination processing will now be described. By using the ML Probe Request/Response and the RNR Element described in S703, the control unit 301 generates a list that associates link IDs, operating frequency bands, and radio channels provided by the AP MLD, which is a connection destination. If a link in the Lower Band is on the list, the control unit 301 determines that the connection candidate links include a link in the Lower Band. If a link in the Lower Band is not on the list, the control unit 301 determines that the connection candidate links do not include a link in the Lower Band. For example, when a list of connection candidates shown in Table 1 is generated, the control unit 301 advances the process to S713.

In S713, the control unit 301 selects two or more links to always include a Lower Band, and performs connection processing for Multi-Link communication. Specifically, the control unit 301 transmits an Association Request including a Multi-Link element in which information indicating link IDs corresponding to the selected connection candidates is stored. This is followed by the connection processing illustrated in Fig. 5. In the selection of connection candidate links, the STA 102 gives a priority to selecting a plurality of links that combine the Lower Band and the millimeter wave band.

In S714, the STA 102 determines whether the connection has been successful. If the connection has failed, the STA 102 scans for further connection candidates, whereas if the connection has been successful, the STA 102 ends the series of connection processing.

Through the processing described above, when the STA 102 performs Multi-Link communication including a link in the millimeter wave band with the AP 101, the STA 102 can transmit a connection request in a form that always includes a link in the Lower Band.

In the present embodiment, an example has been described in which scanning for connection candidates in the Lower Band is followed by scanning for connection candidates in the millimeter wave band. However, the present invention is not limited to this. Scanning in the Lower Band may be performed simultaneously with scanning for connection candidates in the millimeter wave band. By accepting a user operation on a scan setting screen (not illustrated) provided by the communication setting UI unit 302, a band in which scanning is to be performed may be determined.

### <Third Embodiment>

In the first embodiment and the second embodiment, an example has been described in which a connection request in the millimeter wave band can be accepted. In a third embodiment, a mechanism will be described which is configured to receive a connection request including a Lower Band under more simplified control. Specifically, the mechanism is configured to disallow a connection request in the millimeter wave band and accept a connection request only in a frequency band classified as a Lower Band. The present embodiment focuses on the fact that Multi-Link communication can be set up in such a way that a link that transmits a connection request is a primary link of Multi-Link communication.

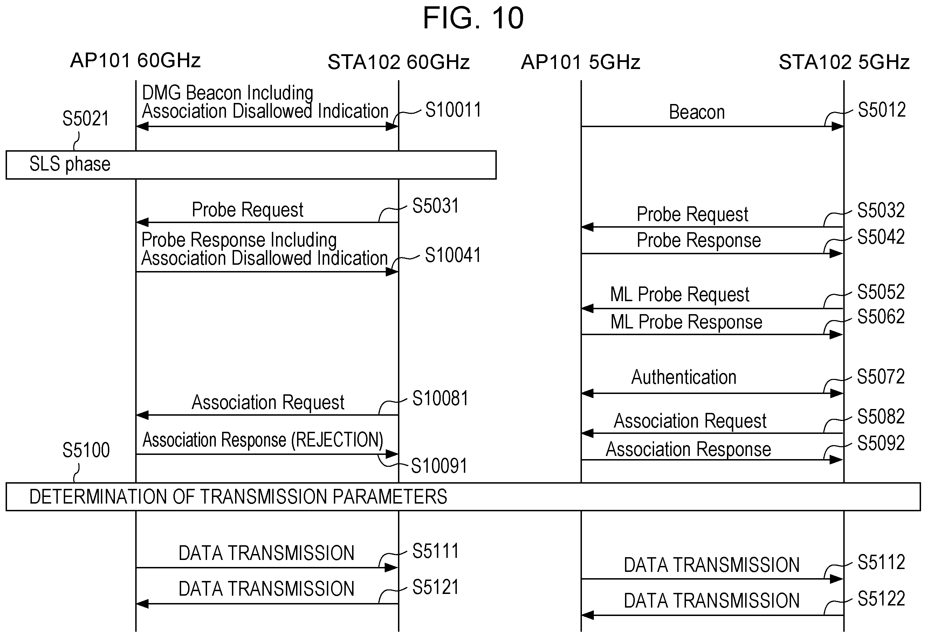

Processing will now be described in detail using Fig. 10. Fig. 10 is a sequence diagram for explaining the third embodiment. Fig. 10 corresponds to the sequence diagram in Fig. 5 described in the first embodiment, and the same or similar processing will be denoted by the same reference numerals.

A difference from Fig. 5 is that an MBO-OCE including an Association Disallowed Indication attribute is added to a DMG Beacon and a Probe Response transmitted by the AP 101 in the millimeter wave band. Specifically, the AP 101 includes, in a DMG Beacon to be transmitted to an STA, an MBO-OCE including an Association Disallowed Indication attribute, and transmits the DMG Beacon to the STA (S10011). Also, the AP 101 includes, in a Probe Response to be transmitted in the millimeter wave band, an MBO-OCE including an Association Disallowed Indication attribute, and transmits the Probe Response (S10041). The AP 101 also includes, in an ML Probe Response to be transmitted in the millimeter wave band, an MBO-OCE including an Association Disallowed Indication attribute.

The processing described above allows the AP 101 to notify the STA, such as the STA 102, in advance that a connection request cannot be made in the millimeter wave band. At the same time, the AP 101 performs control to appropriately transmit, for example, the DMG Beacon. It is thus possible, for example, to set an antenna directivity angle in an SLS Phase in advance, as in the first embodiment.

When receiving an Association Request from the STA through a channel in the millimeter wave band, the AP 101 responds with an Association Response frame in which a Status Code indicating rejection is set (S10081, S10091). This processing makes it possible to prohibit setup processing for Multi-Link communication in the millimeter wave band.

Last, the STA 102 of the third embodiment transmits a connection request for setting up Multi-Link communication through a channel in a frequency band classified as the Lower Band. In this case, the STA 102 transmits the connection request to the AP 101 through an antenna for communication at 2.4 GHz or 5 GHz. In the selection of connection candidate links, the STA 102 gives a priority to selecting a plurality of links that combine the Lower Band and the millimeter wave band.

As described above, in the third embodiment, it is possible to disallow a connection request in the millimeter wave band and accept a connection request only in the frequency band classified as the Lower Band. Therefore, Multi-Link communication in which the Lower Band is always included as a primary link is set up.

### <Modification>

In the third embodiment, a mechanism has been described in which when Multi-Link communication is performed using a communication link in the millimeter wave band, a communication link in a frequency band different from the millimeter wave band is established, in addition to the communication link in the millimeter wave band. On the other hand, depending on how the user uses the STA 102, there may be cases where Multi-Link communication using millimeter waves is not desired to be established. In view of this, the operation setting of whether to establish Multi-Link communication including millimeter waves may be set through the setting screen. In this case, the setting UI unit 302 of the STA 102 displays a communication setting screen (not illustrated) for accepting the operation setting of whether to establish Multi-Link communication including millimeter waves. By operating on the communication setting screen, the user who owns the STA 102 gives an instruction to change the operation setting. Upon accepting the instruction to change, the setting UI unit 302 changes the operation setting to be stored in the storage unit 201 on the basis of the instruction to change.

When the operation setting of establishing Multi-Link communication including millimeter waves is stored, the STA 102 performs connection processing same as or similar to that in the third embodiment. On the other hand, when the operation setting of not establishing Multi-Link communication including millimeter waves is stored, the STA 102 selects only links classified as those in the Lower Band as links used in Multi-Link communication. With the modification described above, it is possible to flexibly control the establishment of connection in consideration of, for example, the user who does not wish to establish Multi-Link communication in the millimeter wave band.

### (Other Embodiments)

The present invention can also be implemented by processing in which a program performing one or more functions of the embodiments described above is supplied to a system or apparatus via a network or storage medium and one or more processors in a computer of the system or apparatus read and execute the program. The present invention can also be implemented by a circuit (e.g., ASIC) that performs one or more functions.

The present invention is not limited to the embodiments described above, and various changes and modifications may be made thereto without departing from the spirit and scope of the present invention. The following claims are appended to disclose the scope of the present invention.

This application claims priority based on Japanese Patent Application No. 2022-182934 filed November 15, 2022, the entire contents of which are hereby incorporated herein by reference.

## Claims

1. A communication apparatus comprising:
control means for establishing links on a plurality of different frequency channels with another communication apparatus on the basis of a connection request received from the another communication apparatus,
wherein when links to be established, which are identified at least on the basis of information included in the connection request, are only links on frequency channels in a millimeter wave band, the control means does not establish links on a plurality of different frequency channels based on the connection request.

2. The communication apparatus according to Claim 1,
wherein when links to be established are only links on frequency channels in the millimeter wave band, the control means transmits a response indicating rejection to the connection request.

3. The communication apparatus according to Claim 1 or Claim 2, further comprising:
a first antenna for communication in the millimeter wave band; and
a second antenna for communication in a frequency band different from the millimeter wave band.

4. The communication apparatus according to Claim 3,
wherein the first antenna is a phased array antenna.

5. The communication apparatus according to any one of Claim 1 to Claim 4, wherein when a connection request conforming to the IEEE 802.11ay is received from another communication apparatus, the control means performs control to establish a single link with the another communication apparatus on the basis of the connection request.

6. A communication apparatus comprising:
acquiring means for acquiring information on a frequency channel for a communication link provided by another communication apparatus; and
control means for transmitting a connection request for establishing a plurality of links with the another communication apparatus,
wherein when including, in a plurality of links to be established with the another communication apparatus, a link on a frequency channel in a millimeter wave band, the control means transmits a connection request in which the plurality of links include at least a link on a frequency channel in a frequency band different from the millimeter wave band.

7. The communication apparatus according to any one of Claim 1 to Claim 6, wherein a frequency band different from the millimeter wave band is a frequency band lower than 10 GHz.

8. The communication apparatus according to any one of Claim 1 to Claim 7, wherein a frequency band different from the millimeter wave band includes at least a 5 GHz band.

9. The communication apparatus according to Claim 6, further comprising:
a first antenna for communication in the millimeter wave band; and
a second antenna for communication in a frequency band different from the millimeter wave band.

10. The communication apparatus according to Claim 9,
wherein the connection request is externally transmitted through the second antenna.

11. A control method of a communication apparatus, the control method comprising:
a control step of establishing links on a plurality of different frequency channels with another communication apparatus on the basis of a connection request received from the another communication apparatus,
wherein when links to be established, which are identified at least on the basis of information included in the connection request, are only links on frequency channels in a millimeter wave band, the control step performs control not to establish links on a plurality of different frequency channels based on the connection request.

12. A control method of a communication apparatus, the control method comprising:
an acquiring step of acquiring information on a frequency channel for a communication link provided by another communication apparatus; and
a control step of transmitting a connection request for establishing a plurality of links with the another communication apparatus,
wherein when including, in a plurality of links to be established with the another communication apparatus, a link on a frequency channel in a millimeter wave band, the control step transmits a connection request in which the plurality of links include at least a link on a frequency channel in a frequency band different from the millimeter wave band.

13. A program causing a computer to execute the control method of a communication apparatus according to Claim 11 or 12.
